# FASCICULE DE BREVET EUROPEEN

(11) **EP 0 753 654 B1**
(45) Date de publication et mention de la délivrance du brevet: **12.04.2000**
(21) Numéro de dépôt: 96401423.7
(22) Date de dépôt: 27.06.1996
(51) Int. Cl.: F02K 7/10, F02K 1/80

(54) **Statoréacteur pour aéronef à vol supersonique et/ou hypersonique**
Staustrahltriebwerk für Über- und/oder Hyperschallflugzeug
Ramjet for supersonic and/or hypersonic vehicle

(30) Priorité: 13.07.1995 FR 9508496
(43) Date de publication de la demande: 15.01.1997
(73) Titulaire: AEROSPATIALE MATRA, 75016 Paris (FR)
(72) Inventeur: Chevalier, Alain, 18000 Asnieres-les-Bourges (FR); Bouchez, Marc, 18000 Bourges (FR); Levine, Vadim, Moscou (RU); Avrachkov, Valery, 117 334 Moscou (RU); Davidenko, Dimitri, Moscou (RU)
(74) Mandataire: Bonnetat, Christian

(56) Documents cités:
- FR-A- 2 660 972
- US-A- 4 895 378
- US-A- 5 076 590

## Description

La présente invention concerne un statoréacteur pour aéronef à vol supersonique et/ou hypersonique, destiné à fonctionner sur une large plage de vitesses. La plage de vitesses envisagée se situe ainsi entre des nombres de Mach de 1-2 à 15-20.

On connaît déjà, par la demande de brevet français n° 95 08417, déposée le 12 juillet 1995, un statoréacteur de ce type, comprenant :
- une entrée de comburant,
- au moins un injecteur de combustible,
- un corps de statoréacteur comportant, d'une part, une portion de chambre de combustion, dans laquelle est effectué le mélange comburant-combustible destiné à être brûlé, et, d'autre part, une portion de tuyère d'échappement, destinée à canaliser les gaz sortant de la chambre de combustion,
- ledit corps de statoréacteur présentant, au voisinage de la zone de transition entre la chambre de combustion et la tuyère d'échappement, une géométrie évolutive passant progressivement d'une section longitudinale convergente puis divergente, pour des vitesses correspondant à un nombre de Mach faible, à une section longitudinale au moins sensiblement constante puis divergente pour des vitesses correspondant à un nombre de Mach élevé.

Comme indiqué dans la demande de brevet français précitée, une telle structure assure une adaptation progressive, en fonction de la vitesse de vol, de la géométrie du corps de statoréacteur dans son ensemble mais notamment au voisinage de la transition entre la chambre de combustion et la tuyère d'échappement (col de tuyère) pour conserver, dans la large plage de vitesses indiquée, des conditions de vol optimales, en particulier une valeur de poussée maximale indépendamment des conditions externes (consommation de combustible, pression aérodynamique, profil du flux de comburant (air) dans l'entrée correspondante). En d'autres termes, cela revient notamment à faire "disparaître" le col de tuyère (géométrie convergente-divergente) existant à "faible" vitesse pour en définitive (nombre de Mach égal ou supérieur à environ 8) obtenir une section constante de la chambre de combustion, suivie par la section divergente de la tuyère d'échappement.

En particulier, pour ce faire, ledit corps de statoréacteur présentant la forme générale d'une conduite de section transversale rectangulaire, constituée de parois deux à deux opposées, au moins une desdites parois comporte des plaques articulées entre elles et, éventuellement, aux extrémités de ladite paroi par des axes respectifs transversaux à l'extension longitudinale du corps du statoréacteur, la position relative d'au moins certaines desdites plaques définissant la géométrie évolutive de la zone de transition entre la chambre de combustion et la tuyère d'échappement.

Dans ce cas, dans les conditions extrêmes, notamment de température, dans lesquelles un tel statoréacteur est susceptible de fonctionner, il se posera inévitablement des problèmes relatifs au bon fonctionnement des articulations desdites plaques, dans la mise en oeuvre de ladite géométrie évolutive.

La présente invention a pour but de résoudre ces problèmes et concerne un statoréacteur du genre indiqué, adapté pour assurer le fonctionnement correct desdites articulations même dans les conditions les plus extrêmes susceptibles d'exister lorsque ledit statoréacteur est en service.

A cet effet, le statoréacteur pour aéronef à vol supersonique et/ou hypersonique, destiné à fonctionner sur une large plage de vitesses, comporte :
- une entrée de comburant,
- au moins un injecteur de combustible,
- un corps, dans lequel sont effectués le mélange comburant-combustible destiné à être brûlé et la canalisation des gaz résultant de cette combustion, au moins une paroi dudit corps étant constituée, au moins partiellement, de plaques reliées entre elles par des articulations, de façon à faire évoluer la géométrie dudit corps en fonction de la vitesse de fonctionnement du statoréacteur, et
- des premiers moyens de soufflage de fluide montés au niveau desdites articulations, pour assurer le refroidissement de celles-ci, lesdits premiers moyens de soufflage de fluide comportant, chacun, une lame souple cintrée montée à l'extrémité d'un conduit d'amenée de fluide, solidaire d'une plaque et en appui contre l'extrémité arrondie de la plaque adjacente par sa face convexe.

Ainsi, le bon fonctionnement desdites articulations peut être garanti, lors de la commande de la géométrie du corps du statoréacteur, même dans les conditions les plus extrêmes, en particulier de température, régnant au voisinage de celles-ci. En même temps qu'un refroidissement, le film de fluide ainsi créé assure l'étanchéité au niveau des articulations.

On remarquera que le document FR-A-2660972 décrit la tuyère d'un réacteur hypersonique, dans laquelle il est prévu une lèvre d'étanchéité entre une paroi extérieure, portant ladite lèvre, et un volet de détente. Dans cette tuyère, ladite paroi extérieure est traversée par des canaux de refroidissement, dans lesquels s'écoule un combustible cryogénique. Le canal le plus à l'arrière est pourvu d'au moins une sortie, de laquelle s'écoule une faible quantité de combustible, qui passe à travers la fente étroite ménagée entre la lèvre d'étanchéité et le volet de détente, en refroidissant suffisamment ladite lèvre d'étanchéité.

Un problème analogue à celui rappelé ci-dessus peut se poser dans le cas où le corps du statoréacteur conforme à la présente invention comporte deux parois latérales agencées de part et d'autre, respectivement, de ladite paroi mobile, c'est-à-dire qu'il présente une structure de section transversale généralement rectangulaire et qu'un jeu existe entre la paroi mobile et chacune des parois latérales. Dans un tel cas, pour garantir le refroidissement et l'étanchéité au niveau dudit jeu, il est prévu des seconds moyens de soufflage de fluide, disposés aux extrémités longitudinales latérales des plaques articulées constituant ladite paroi mobile, dans le jeu entre la plaque mobile respective et chacune desdites parois latérales.

En particulier, lesdits premiers moyens de soufflage de fluide peuvent comporter, chacun, une lame souple cintrée, montée à l'extrémité d'un conduit d'amenée de fluide, solidaire d'une plaque et en appui contre l'extrémité arrondie de la plaque adjacente par sa face convexe.

De plus, lesdits seconds moyens de soufflage de fluide peuvent comporter, chacun, une lame souple cintrée dont la courbure est telle que ladite lame s'appuie, par sa face convexe, sur la face interne de la paroi latérale respective, tandis qu'un conduit d'amenée de fluide débouche au-dessous de ladite lame en regard de ladite face interne.

De préférence, chaque articulation comporte un axe, transversal à l'extension longitudinal dudit corps, solidaire d'une plaque par l'intermédiaire d'un palier et de la plaque adjacente par l'intermédiaire d'un bras en porte-à-faux.

Avantageusement, ledit fluide est un gaz, notamment de l'hydrogène.

Les figures du dessin annexé feront bien comprendre comment l'invention peut être réalisée.

La figure 1 est une vue en coupe longitudinale d'un exemple de réalisation d'un statoréacteur selon l'invention.

La figure 2 montre, également en coupe longitudinale, mais à plus grande échelle, l'articulation entre deux plaques appartenant à la paroi mobile du corps du statoréacteur.

La figure 3 illustre, de façon très schématique, l'agencement respectif de la paroi mobile et des parois latérales du corps du statoréacteur.

La figure 4 est une vue agrandie du détail A de la figure 3.

Le statoréacteur 1, montré sur les figures, pour aéronef à vol supersonique et/ou hypersonique, est destiné à fonctionner dans une large plage de vitesses, c'est-à-dire d'un nombre de Mach de 1-2 à un nombre de Mach de 15-20.

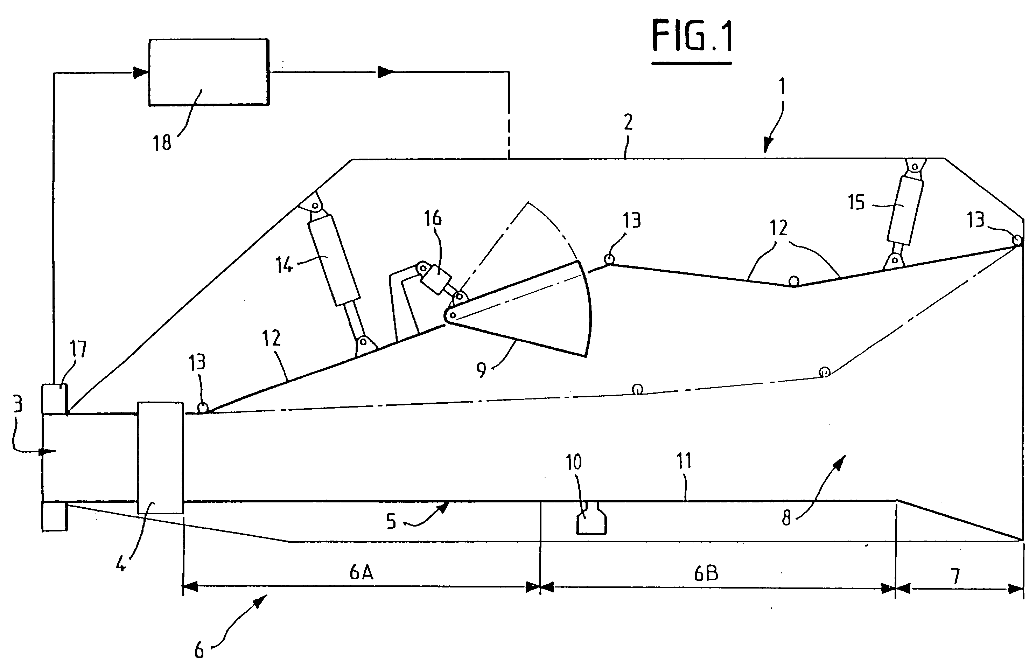

Dans un carter ou enveloppe 2, le statoréacteur 1 comprend :
- une entrée de comburant 3, notamment une prise d'air, en amont du moteur, implantée sous l'intrados du fuselage de l'aéronef associé au statoréacteur,
- des injecteurs de combustible 4, prévus en amont du corps 5 du statoréacteur,
- ledit corps 5 se décomposant, comme on le voit bien sur la figure 1, en une portion de chambre de combustion 6 et une portion de tuyère 7, définissant entre elles une zone de transition (ou col) 8, définie par une géométrie convergente-divergente évoluant en fonction de la vitesse, c'est-à-dire du nombre de Mach, de fonctionnement du statoréacteur.

Par ailleurs, la chambre de combustion 6 elle-même se subdivise en une zone de diffusion 6A, où commence la combustion supersonique, et une zone de chambre 6B, où se produit la combustion subsonique, derrière les accroche-flammes 9, et où se termine la combustion supersonique, les injecteurs 4 répartissant le combustible dans toute la veine. Un dispositif d'allumage 10 est prévu au niveau de la chambre 6B. On notera que, comme combustible, on peut envisager d'utiliser du kérosène pour les Mach de vol les plus faibles (jusqu'à Mach 8) (éventuellement avec un barbotage d'hydrogène de façon à faciliter l'allumage du statoréacteur et l'éclatement du jet), puis de l'hydrogène pour les Mach plus élevés. D'autres combustibles, tels que du méthane, des hydrocarbures endothermiques, des combustibles de synthèse, peuvent également être employés pour un moteur de ce type.

Le corps 5 du statoréacteur présente, dans son ensemble, une forme de conduite de section transversale rectangulaire, constituée généralement de quatre parois deux à deux opposées, dont seules les parois inférieure 11 et supérieure sont visibles sur la figure 1. Pour des raisons de clarté, les parois latérales correspondantes n'ont pas été représentées sur cette figure. Pour obtenir la géométrie évolutive objet de l'invention, la paroi supérieure est constituée de plaques 12 articulées entre elles et aux extrémités de la paroi par des axes respectifs 13 transversaux à l'extension longitudinale du corps 5 du statoréacteur. Pour permettre le mouvement relatif d'articulation entre les différentes plaques 12, certaines d'entre elles sont réalisées en deux parties présentant une zone de chevauchement (non représenté sur la figure 1). On notera cependant que la figure 1 de la demande de brevet français n° 95 08417 illustre un tel agencement.

Il est bien entendu qu'une telle configuration n'est nullement limitative, aussi bien en ce qui concerne la paroi mobile "choisie" que le nombre de plaques qui la constituent. En particulier, une autre paroi, ou plusieurs parois, du statoréacteur auraient pu être conçues pour présenter une telle "mobilité".

La mobilité des plaques 12 est assurée par un ensemble de vérins 14, 15. De façon analogue, un vérin 16 assure le positionnement et, éventuellement, l'escamotage de chaque accroche-flammes 9.

La mise en oeuvre du statoréacteur suppose de plus que, ayant reçu un signal d'un dispositif 17 qui mesure la poussée, qui est une fonction linéaire intégrale de l'efficacité opératoire du statoréacteur, l'ordinateur de bord 18 de l'aéronef tend constamment à atteindre une géométrie optimale de la partie de passage de la chambre de combustion (corps 5 du statoréacteur) grâce à l'actionnement correspondant des vérins de commande 14, 15, des plaques articulées 12 de la paroi supérieure. Comme dispositif de mesure, on peut envisager l'utilisation d'un capteur de poussée, détectant la valeur de la force longitudinale (axiale) engendrée pendant le fonctionnement du statoréacteur, c'est-à-dire la poussée. La valeur de la poussée est déterminée par l'efficacité du processus opératoire : l'efficacité de la combustion et le rapport de récupération de pression totale (fonction des pertes hydrauliques totales du statoréacteur). Le niveau de ces deux paramètres dépend de la géométrie de la partie de passage (à chaque point de la trajectoire) et de l'efficacité des moyens de stabilisation (accroche-flammes 9), qui représentent en fait également une commande géométrique.

Pour de plus amples détails concernant le fonctionnement du statoréacteur dans les différents domaines de vitesses considérés, on se rapportera à la demande de brevet français précitée.

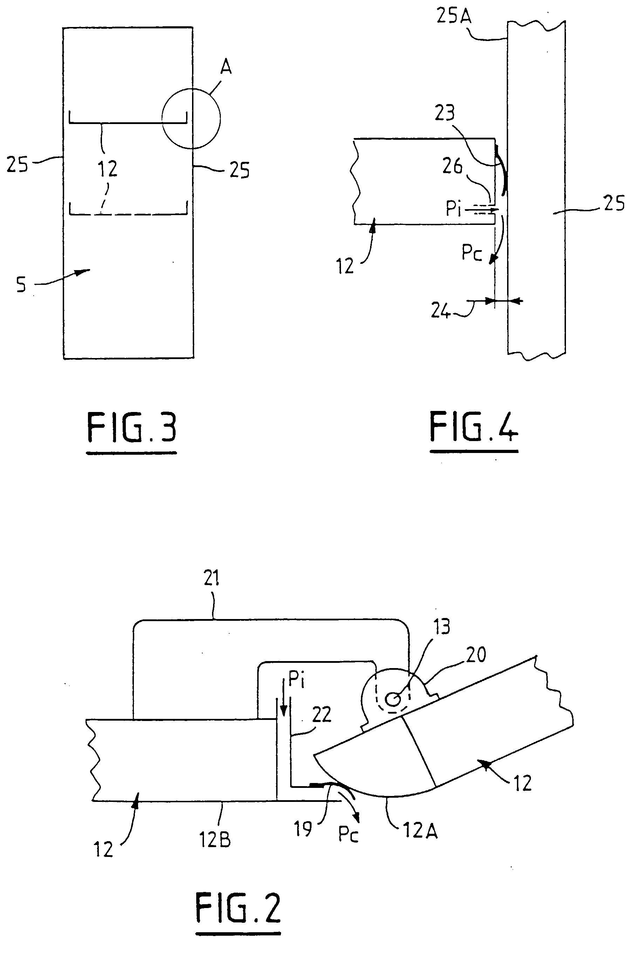

Par ailleurs, selon l'invention, des premiers moyens de soufflage de fluide, comportant des vannes de mise sous pression 19, conçues sous la forme de lames souples cintrées, sont montés au niveau des articulations entre deux plaques adjacentes (figure 2). L'axe d'articulation 13, dans cet exemple de réalisation, est solidaire d'une plaque 12 par l'intermédiaire d'un palier 20 et de la plaque 12 adjacente par l'intermédiaire d'un bras en porte-à-faux 21 prévu à l'intérieur du carter 2. Plus précisément, la première plaque 12 citée présente une extrémité arrondie 12A (du côté de la chambre de combustion) susceptible de coopérer avec la lame souple 19 correspondante, dont la courbure est inversée par rapport à celle de ladite extrémité arrondie 12A, et qui est montée à l'extrémité d'un conduit 22, solidaire de l'extrémité 12B en regard de la plaque adjacente 12, d'amenée de fluide, notamment du gaz, en particulier de l'hydrogène. Le conduit 22 s'étend, de façon non représentée, dans le carter 2 du statoréacteur vers la source de fluide correspondante.

De même, des seconds moyens de soufflage de fluide comportant des vannes de mise sous pression 23, également conçues sous la forme de lames souples, sont montés, à chaque fois, aux extrémités longitudinales latérales des plaques 12, dans l'espace ou jeu 24 entre la plaque mobile 12 respective et chacune des deux parois latérales fixes 25, délimitant, avec les parois inférieure et supérieure, le corps 5 du statoréacteur (figures 3 et 4). La courbure des lames 23 est telle que ces dernières s'appuient, par leur face convexe, sur la face interne 25A de la paroi latérale respective 25. Un conduit d'amenée de fluide 26 débouche au-dessous de la lame 23 en regard de la face interne 25A de la paroi 25 correspondante.

Comme déjà indiqué, pendant la commande de la géométrie de la partie de passage de la chambre de combustion, des problèmes peuvent se produire au niveau des articulations 3 et/ou des jeux 24, travaillant dans un environnement extrême, en particulier en ce qui concerne la température, problèmes susceptibles d'entraîner un blocage, ou tout au moins un dysfonctionnement, des articulations 3 et des plaques 12. Pour y remédier, du gaz est amené, par les conduits 22, 26, vers les vannes respectives 19 et 23. A ce moment, on atteint la condition suivante : Pi>Pc, Pi étant la pression du gaz amené et Pc la pression de la chambre de combustion. L'injection de gaz, notamment de l'hydrogène, assure à la fois, grâce au film de fluide relativement "froid" ainsi engendré au niveau des articulations entre des plaques adjacentes et des jeux entre les plaques et les parois latérales, l'étanchéité et le refroidissement de ces zones garantissant le bon fonctionnement des pièces en question. En particulier, le gaz injecté refroidit la surface interne de l'extrémité 12A de la plaque 12 en contact de la lame 19 et engendre un écran de protection thermique à la jonction entre deux plaques adjacentes.

Du gaz de fuite, pénétrant éventuellement dans le carter 2, est recueilli et ramené dans la chambre de combustion par les injecteurs 4.

## Revendications

1. Statoréacteur pour aéronef à vol supersonique et/ou hypersonique, destiné à fonctionner sur une large plage de vitesses, comportant :
- une entrée de comburant (3),
- au moins un injecteur de combustible (4),
- un corps (5), dans lequel sont effectués le mélange comburant-combustible destiné à être brûlé et la canalisation des gaz résultant de cette combustion, au moins une paroi dudit corps (5) étant constituée, au moins partiellement, de plaques (12) reliées entre elles par des articulations, de façon à faire évoluer la géométrie dudit corps en fonction de la vitesse de fonctionnement du statoréacteur, et
- des premiers moyens (19, 22) de soufflage de fluide montés au niveau desdites articulations (13), pour assurer le refroidissement de celles-ci, lesdits premiers moyens de soufflage de fluide comportant, chacun, une lame souple cintrée (19), montée à l'extrémité d'un conduit d'amenée (22) de fluide, solidaire d'une plaque (12) et en appui contre l'extrémité arrondie (12A) de la plaque adjacente (12) par sa face convexe.

2. Statoréacteur selon la revendication 1, dans lequel ledit corps (5) comporte deux parois latérales (25) agencées de part et d'autre, respectivement, de ladite paroi mobile (12),
caractérisé en ce qu'il comporte des seconds moyens de soufflage de fluide (23,26), disposés aux extrémités longitudinales latérales des plaques articulées (12) constituant ladite paroi mobile, dans le jeu (24) entre la plaque mobile respective (12) et chacune desdites parois latérales (25).

3. Statoréacteur selon la revendication 2,
caractérisé en ce que lesdits seconds moyens de soufflage de fluide comportent, chacun, une lame souple (23) cintrée dont la courbure est telle que ladite lame s'appuie, par sa face convexe, sur la face interne (25A) de la paroi latérale respective (25), tandis qu'un conduit d'amenée de fluide (26) débouche au-dessous de ladite lame (23) en regard de ladite face interne (25A).

4. Statoréacteur selon l'une quelconque des revendications 1 à 3,
caractérisé en ce que chaque articulation comporte un axe (13), transversal à l'extension longitudinal dudit corps, solidaire d'une plaque (12) par l'intermédiaire d'un palier (20) et de la plaque (12) adjacente par l'intermédiaire d'un bras en porte-à-faux (21).

5. Statoréacteur selon l'une quelconque des revendications 1 à 4,
caractérisé en ce que ledit fluide est un gaz, notamment de l'hydrogène.

## Patentansprüche

1. Staustrahltriebwerk für Über- und/oder Hyperschallflugzeug, das in einem großen Geschwindigkeitsbereich eingesetzt werden soll und folgendes umfasst:
- einen Sauerstoffträgereinlauf (3);
- mindestens eine Brennstoffeinspritzdüse (4);
- einen Körper (5), in dem das Sauerstoffträger-Brennstoff-Gemisch, das verbrannt werden soll hergestellt wird, und die bei dieser Verbrennung entstehenden Gase kanalisiert werden, wobei mindestens eine Wand des genannten Körpers (5) zumindest teilweise aus untereinander mit Gelenken verbundenen Platten (12) besteht, um zu erreichen, dass sich die Geometrie des genannten Körpers in Abhängigkeit von der Betriebsgeschwindigkeit des Staustrahltriebwerks verändert, und
- erste Fluidblasmittel (19, 22), die an den genannten Gelenken (13) zur Gewährleistung der Kühlung derselben montiert sind, wobei jedes der genannten ersten Fluidblasmittel eine flexible gekrümmte Lamelle (19) umfasst, die am Ende einer Fluidzufuhrleitung (22) angebracht und fest verbunden ist mit einer Platte (12) und mit ihrer konvexen Seite auf dem abgerundeten Ende (12A) der angrenzenden Platte (12) aufliegt.

2. Staustrahltriebwerk gemäß Anspruch 1, in dem der genannte Körper (5) zwei Seitenwände (25) umfasst, die auf der einen beziehungsweise der anderen Seite der genannten beweglichen Wand (12) angeordnet sind,
dadurch gekennzeichnet, dass es zweite Fluidblasmittel (23,26) umfasst, die an den seitlichen Längsenden der die genannte bewegliche Wand bildenden Gelenkplatten (12) im Spiel (24) zwische der entsprechenden beweglichen Platte (12) und jeder der genannten Seitenwände (25) angeordnet sind.

3. Staustrahltriebwerk gemäß Anspruch 2,
dadurch gekennzeichnet, dass jedes der genannten zweiten Fluidblasmittel eine flexible, gekrümmte Lamelle (23) umfasst, deren Krümmung so beschaffen ist, dass die genannte Lamelle mit ihrer konvexen Seite auf der Innenfläche (25A) der jeweiligen Seitenwand (25) aufliegt, wohingegen einen Fluidzufuhrleitung (26) unter der genannten Lamelle (23) gegenüber der genannten Innenfläche (25A) mündet.

4. Staustrahltriebwerk gemäß einem beliebigen der Ansprüche 1 bis 3,
dadurch gekennzeichnet, dass jedes Gelenk einen quer zur Längsverlängerung des genannten Körpers liegenden Achsbolzen (13) umfasst, der mittels eines Lagers (20) fest mit einer Platte (12) und mittels eines Kragarms (21) mit der angrenzenden Platte (12) verbunden ist.

5. Staustrahltriebwerk gemäß einem beliebigen der Ansprüche 1 bis 4,
dadurch gekennzeichnet, dass das genannte Fluid ein Gas, insbesondere Wasserstoff ist.

## Claims

1. Aircraft ram jet engine for supersonic and/or hypersonic flight, intended to operate over a wide range of speeds, including:
- an oxidant inlet (3),
- at least one fuel injector (4),
- a body (5) in which the oxidant and fuel intended to be burnt are mixed and the gases resulting from this combustion are channelled, at least one wall of the said body (5) consisting, at least partially, of plates (12) linked together by articulations, in such a way as to cause the geometry of the said body to change as a function of the operating speed of the ram jet engine, and
- first fluid blowing means (19, 22), mounted in the region of the said articulations (13), in order to cool them, the said first fluid blowing means each including a curved flexible strip (19), mounted at the end of a fluid inlet duct (22), integral with a plate (12) and bearing against the rounded end (12A) of the adjacent plate (12) by its convex face.

2. Ram jet engine according to Claim 1, in which the said body (5) includes two side walls (25) arranged on either side, respectively, of the said movable wall (12), characterized in that it includes second fluid blowing means (23, 26), arranged at the lateral longitudinal ends of the articulated plates (12) constituting the said movable wall, in the clearance (24) between the respective movable plate (12) and each of the said side walls (25).

3. Ram jet engine according to Claim 2, characterized in that the said second fluid blowing means each include a curved flexible strip (23) the curvature of which is such that the said strip bears, via its convex face, on the inner face (25A) of the respective side wall (25), while a fluid inlet duct (26) opens out below the said strip (23) opposite the said inner face (25A).

4. Ram jet engine according to any one of Claims 1 to 3, characterized in that each articulation includes a spindle (13), transverse to the longitudinal extension of the said body, integral with a plate (12) by means of a bearing (20) and of the adjacent plate (12) by means of a cantilevered arm (21).

5. Ram jet engine according to any one of Claims 1 to 4, characterized in that the said fluid is a gas, particularly hydrogen.
